# EUROPEAN PATENT APPLICATION

(11) **EP 1 074 490 A1**
(43) Date of publication of application: **07.02.2001**
(21) Application number: 99830500.7
(22) Date of filing: 02.08.1999
(51) Int. Cl.: B65G 17/08, B65G 15/42

(54) **Conveyor with removable strips particularly for molded articles**

(71) Applicant: Costruzioni Meccaniche Crizaf S.p.A., 21047 Saronno (VA) (IT)
(72) Inventor: Cribiu Oreste, 21040 Gerenzano (VA) (IT)
(74) Representative: Petruzziello, Aldo

(57) **Abstract**

A conveyor (1) for conveying articles from a first work station to a second work station, comprising a conveyor belt (6) of the slat or apron type comprising a plurality of plates (10) linked to one another to form a loop and a plurality of strips (20) mounted transversally and removably, on at least some of said slats (10) to retain the articles conveyed by said conveyor belt (6); said strips (20) are easily replaceable in the event of breakage or a change in production. Also provided is a hopper (30) able to direct the articles toward said conveyor belt (6), having fold-down walls (31, 32, 33) so as to assume the most compact configuration vertically during movements of the conveyor (1).

## Description

The present invention refers to a conveyor in particular of the type for picking up pieces from a flat surface at a low level and conveying them toward a higher loading area. Said type of conveyor is particularly suitable to be employed for molded plastic articles produced by normal molding machines but it can find use in many fields of application.

For picking up pieces from a flat surface at low level and conveying them toward a higher loading area, use is made of conveyors equipped with an endless belt disposed horizontally in a first portion for loading of pieces and inclined in a second portion for lifting thereof. To prevent the articles from sliding downward along the second inclined portion under the effect to the force of gravity, strips are disposed transversally and substantially at right angles to the plane of the belt so as to retain the articles.

According to the prior art, conveyor belts of fabric with strips welded thereto by means of ultrasound or heat welding are currently utilized for the above purpose. These conveyor belts have some drawbacks due to the fact that with time said strips tend to break at the welding points and consequently the entire belt must be replaced, with considerable financial loss and waste of time.

There exist on the market other types of conveyor belts of the type known as slat or apron conveyors, made up of a series of overlapping metal plates linked to each other. In this type of conveyor belt the strips are obtained in a single body with the corresponding slats of the belt and are therefore of hard material.

These conveyor belts too have drawbacks, due mainly to the fact that the molded articles, which are still hot when they leave the mold, can be damaged if they fall on the strips instead of on the flat surfaces of the conveyor, especially if they are heavy.

Another drawback of known conveyors is that the horizontal loading surface must be at a very low height if it is to be inserted in an opening in the frame of the press, beneath the molds. Consequently, said horizontal loading surface makes no provision for a hopper able to avoid escape of the molded pieces, or else it provides for very low hoppers that prove inadequate. This is due to the fact that a sufficiently high hopper would knock against the frame of the molding machine and prevent the horizontal loading surface from being inserted in place beneath the molds.

The object of the invention is to eliminate said drawbacks, providing a conveyor with removable strips that is practical, versatile, economical and easy to make.

This object is achieved according to the invention with the characteristics listed in appended independent claim 1.

Preferred embodiments of the invention are apparent from the dependent claims.

The conveyor according to the invention is of the slat or apron type and comprises a series of linked plates. Some of said plates have seats able to removably accommodate strips that are arranged transversally to the conveyor and at right angles with respect to the plane thereof. These strips are slightly curved in shape at the tip in order to be able to retain the molded articles during conveying thereof.

The strips are advantageously made of flexible material, such as polyurethane or PVC, for example. Thanks to the elasticity of said strips, the molded pieces leaving the mold thus suffer no deformation if they fall on the strips.

Furthermore, assembly and replacement of these strips is extremely simple and fast and, if breakage of a strip occurs, it can quickly be replaced without any need to replace the entire conveyor belt.

Furthermore, through insertion or removal of the strips, conveyor belts suitable for different types of articles to be conveyed can be configured.

The conveyor according to the invention further provides for a hopper with fold-down sides mounted on the horizontal loading surface. In this manner, when the horizontal loading surface must be positioned beneath the molds of the molding machine, the sides of the hopper are closed into the configuration occupying least space, in which the hopper has a minimum height so that it can be inserted in the opening made in the frame of the machine in a position under the molds.

Then, the sides of the hopper are opened into the working configuration suitable for conveying the molded articles on the horizontal loading surface of the conveyor. In this manner it is possible to have a sufficiently high hopper to prevent the molded articles from falling out of the conveyor and, at the same time, to soften the fall of the articles.

Further characteristics of the invention will be made clearer by the detailed description that follows, referring to a purely exemplary and therefore non-limiting embodiment thereof, illustrated in the appended drawings, in which:
Figure 1 is an axonometric view of a conveyor according to the invention, with the hopper in the open working position;
Figure 2 is an axonometric view of a portion of the conveyor belt according to the invention, showing a dismantled strip;
Figure 3 is a cross section of the conveyor belt taken along the plane III-III in Figure 2;
Figure 4 is an axonometric view of the hopper of the conveyor according to the invention in a closed position occupying least space.

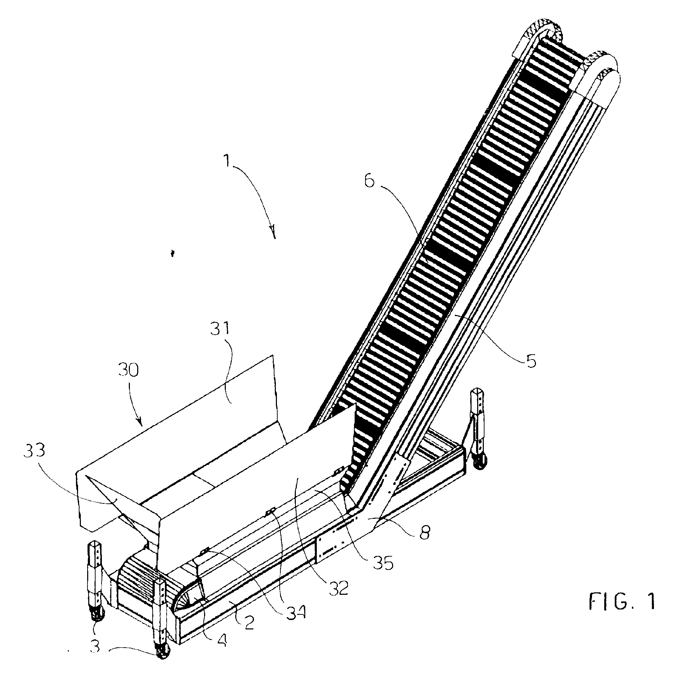

In Figure 1 a conveyor denoted as a whole with reference numeral 1 is shown. The conveyor 1 comprises a base frame 2 shaped like a rectangular frame supported by swivel wheels 3 so that it can easily be moved.

On the base frame 2 a horizontal loading surface 4 and an inclined conveying surface 5 are mounted. The horizontal surface 4 is parallel to the plane of the base frame 2, is at a low level and serves to receive the molded articles coming from a molding machine. The inclined surface 5 is anchored to the base frame 2 by means of elbow-shaped supports 8 and serves to convey the molded articles from the horizontal surface 4 toward a station at a high level.

A conveyor belt 6 is wound in an endless loop along the horizontal surface 4 and the inclined surface 5. The conveyor belt 6 is driven by means of a per se known chain drive and is guided by means of special profiles.

Mounted on the base frame 2 is a hopper 30 which opens over the horizontal loading surface 4 so as to prevent the molded articles coming from the molds of a molding machine from escaping from the horizontal loading surface 4.

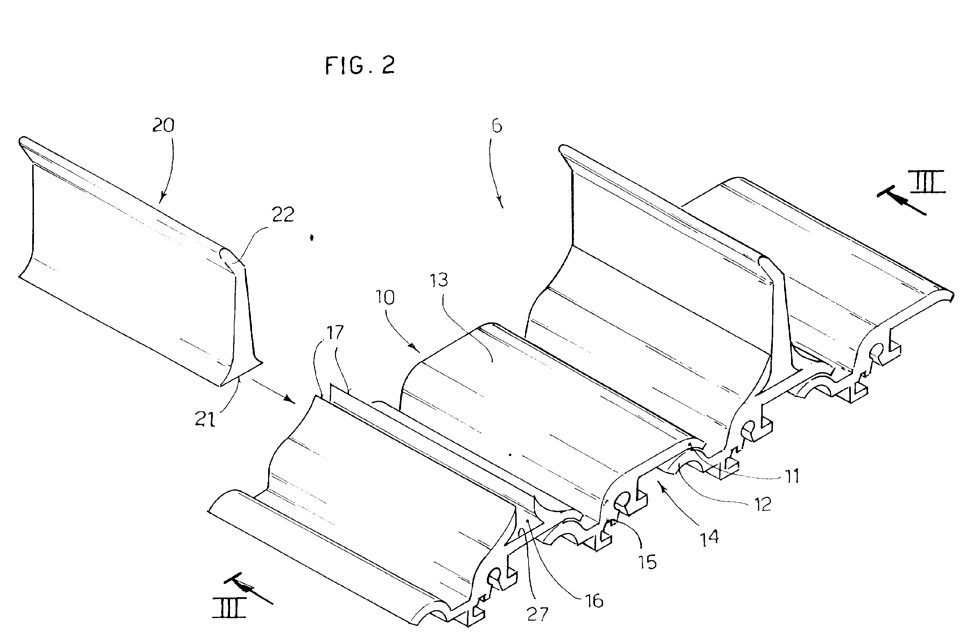

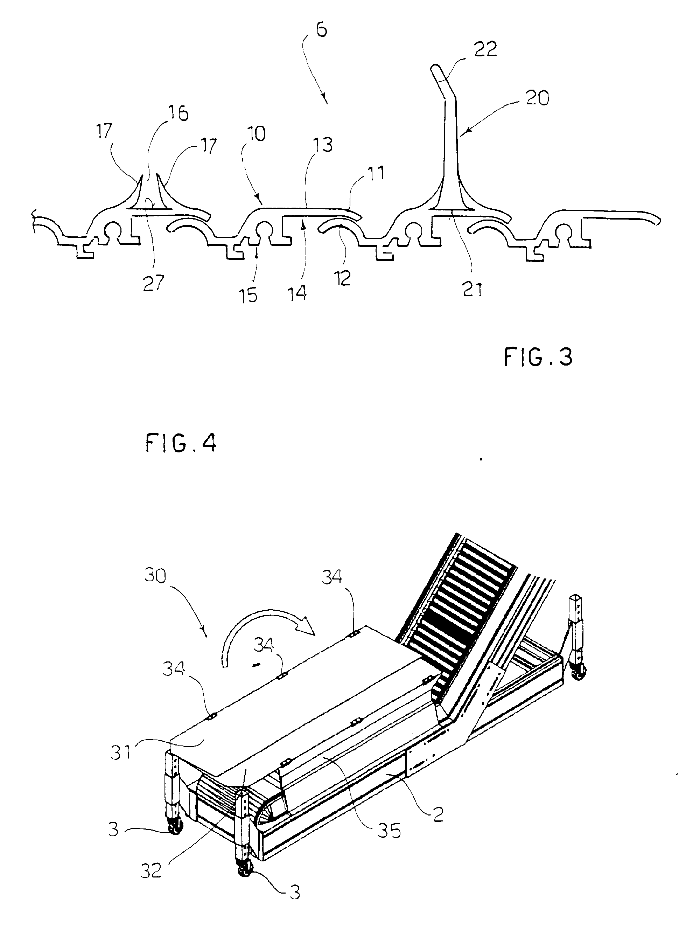

Figures 2 and 3 show the conveyor belt 6 of the slat or apron type. The conveyor belt 6 comprises a plurality of plates 10 having complementary end edges 11 and 12 so that they can engage with one another in an overlapping fashion.

Each plate 10 has a substantially smooth upper surface 13 suitable for receiving the articles that have to be conveyed and a lower surface 14 in which ribs 15 are provided, destined to engage with the drive means of the conveyor belt mounted in the horizontal surface 4 and/or in the inclined surface 5.

On the upper surface 13 of some plates 10 a seat 16 is provided, formed by two opposite facing parallel walls 17 that protrude at right angles from the upper surface 13 of the plate 10. The bottom part of the seat 16 is a cavity that has a dovetail conformation 27 at its base. The walls 17 extend transversally for the whole width of the plate 10 so as to form a guide suitable for crosswise insertion of a strip 20.

The length of the strip 20 is equal to the width of the plate 10 and its thickness is substantially equal to the width of the seat 16. The strip 20 has at its base a dovetail conformation 21 substantially complementary in shape to the dovetail conformation 27 of the seat 16.

The strip 20 is of a suitable height to allow the articles conveyed by the conveyor belt 6 to be retained and has in its upper end a slightly curved part 22 to allow better retention of the articles conveyed by the conveyor belt 6.

The strip 20 can be made of flexible plastic material such as PVC or polyurethane, for example, to avoid deformations or breakages of the articles that fall thereon.

The strip 20 is inserted by sliding into the seat 16 and blocked by means of the side walls that join adjacent plates 10 which are per se known and therefore not shown. The dovetail conformation 21 of the strip 20 engages inside the dovetail conformation 27 of the seat 16 thus preventing a possible disengagement of the strip 20 due to stress in the direction at right angles to the surface of the conveyor belt 6.

It is obvious that in the conveyor belt 1 according to the invention assembly and disassembly of said strips 20 is extremely simple and rapid, thus allowing rapid replacement of the strips in the event of changes in production or breakage thereof, without any need to change the entire conveyor belt. Furthermore, the flexibility of the strips makes it possible not to cause damage to the molded pieces as they fall.

Naturally the dovetail conformation of the strips 20 and of the relative seats 16 is purely indicative, and other shapes are possible.

With reference to Figure 1 the hopper 30 comprises three boards, two side boards 31 and 32 and a front board 33. Each board 31, 32 and 33 is fixed, by means of hinges 34 to a supporting structure 35 mounted on the base frame 2 above the horizontal surface 4.

In this manner when the conveyor 1 has to be inserted in an opening provided in the frame of the molding machine, in a position below the molds, the hopper 30 is closed in the most compact configuration, shown in Figure 4. That is to say the front board 33 is rotated around its hinges so as to abut on the supporting structure 35, then the side board 32 and the side board 33 are folded down, resting one on top of the other and on top of the supporting structure 35 so as to obtain the most compact configuration, shown in Figure 4.

In this most compact configuration the hopper 30 is positioned beneath the molds of the molding machine, then opened into the working configuration shown in Figure 1 to prevent the molded articles from falling outside the horizontal surface 4 of the conveyor 1.

When the work cycle is terminated and the conveyor has to be moved away from the molding machine, the hopper 30 is closed into its most compact configuration again.

## Claims

1. A conveyor (1) for conveying articles, in particular molded plastic pieces, from a first work station to a second work station, comprising an endless conveyor belt 6 with a plurality of strips (20) disposed transversally thereon to retain the articles conveyed on said conveyor belt (6), characterized in that said strips (20) are removably mounted on said conveyor belt (6).

2. A conveyor belt according to claim 1, characterized in that said second station is situated at a higher level than said first station.

3. A conveyor according to claim 1 or 2, characterized in that it is a slat or apron type conveyor belt, comprising a plurality of plates (10) linked to one another to form an endless closed loop, said strips (20) being mounted to slide in corresponding seats (16) provided lengthwise in at least some of said plates (10).

4. A conveyor belt according to claims 1, 2 or 3 characterized in that said strips (20) are of flexible material.

5. A conveyor according to claim 4 characterized in that said strips (20) are made of PVC, polyurethane, rubber or similar flexible materials.

6. A conveyor according to any one of claims 2 to 5, characterized in that each of said seats (16) comprises two parallel opposite facing walls (17), protruding from a corresponding plate (10) of said conveyor belt so as to form a guide for sliding insertion of said strip (20).

7. A conveyor according to any one of claims 2 to 6, characterized in that said strip (20) has a flaring base (21) such as to engage in a flaring cavity (27) provided on the bottom of the seat (16) so as to prevent the strip (20) from being pulled out in a direction at right angles to the surface of the conveyor belt.

8. A conveyor belt according to claim 7, characterized in that said flaring base (21) of the strip (20) and said flaring cavity (27) of the seat (16) are dovetail shaped.

9. A conveyor according to any one of the preceding claims, comprising a hopper (30) able to direct the articles coming from said first work station onto said conveyor belt (6), said articles being in particular molded plastic pieces coming from the molds of a molding machine, characterized in that said hopper (30) has fold-down walls (31, 32, 33) so as to take on the most compact configuration vertically, such as to allow insertion of said hopper into an opening made in the frame of the molding machine, in order to be positioned beneath the molds.

10. A conveyor (1) for conveying articles, in particular molded plastic pieces coming from the molds of a molding machine, toward a subsequent work station normally situated at a higher level, said conveyor belt comprising a hopper (30) able to direct said articles onto the conveyor belt, characterized in that said hopper (30) has fold-down walls (31, 32, 33) so as to take on the most compact configuration vertically, such as to allow insertion of said hopper in an opening made in the frame of the molding machine, in order to be positioned beneath the molds.
